# EUROPÄISCHE PATENTSCHRIFT

(11) **EP 3 200 429 B1**
(45) Veröffentlichungstag und Bekanntmachung des Hinweises auf die Patenterteilung: **17.04.2019**
(21) Anmeldenummer: 16153635.4
(22) Anmeldetag: 01.02.2016
(51) Int. Cl.: H04L 29/08, H04H 20/62

(54) **VERFAHREN ZUM ABRUFEN EINES DATENSTROMS VON EINEM SERVER SOWIE FAHRZEUG MIT EINEM NETZWERKZUGRIFFSPUNKT**
METHOD FOR RETRIEVING A DATA STREAM FROM A SERVER AND VEHICLE WITH NETWORK ACCESS POINT
PROCÉDÉ D'EXTRACTION D'UN TRAIN DE DONNÉES PROVENANT D'UN SERVEUR ET VÉHICULE AUTOMOBILE COMPRENANT UN POINT D'ACCES AU RESEAU

(43) Veröffentlichungstag der Anmeldung: 02.08.2017
(73) Patentinhaber: Volkswagen Aktiengesellschaft, 38440 Wolfsburg (DE)
(72) Erfinder: KWOCZEK, Andreas, 38165 Lehre (DE)

(56) Entgegenhaltungen:
- EP-A1- 2 942 971
- JIANGCHUAN LIU ET AL: "Proxy caching for media streaming over the internet", IEEE COMMUNICATIONS MAGAZINE, IEEE SERVICE CENTER, PISCATAWAY, US, Bd. 42, Nr. 8, 1. August 2004 (2004-08-01) , Seiten 88-94, XP011115856, ISSN: 0163-6804, DOI: 10.1109/MCOM.2004.1321397

## Beschreibung

Die vorliegende Erfindung betrifft das Streamen von Daten im Fahrzeug. Insbesondere betrifft die vorliegende Erfindung ein Verfahren zum Abrufen eines Datenstroms von einem Server. Weiterhin betrifft die vorliegende Erfindung ein Fahrzeug mit einem Netzwerkzugriffspunkt.

Die Digitalisierung nimmt auch in Fahrzeugen immer mehr an Bedeutung zu. Bei den Kraftfahrzeugen kann es sich sowohl um Personen- als auch um Nutzfahrzeuge handeln. Zum Beispiel kann ein Kraftfahrzeug ein Personenkraftwagen, ein Lastkraftwagen, ein Motorrad oder ein Traktor sein. Allgemein kann ein Kraftfahrzeug als eine Vorrichtung aufgefasst werden, die einen Motor, ein Antriebsstrangsystem sowie Räder umfasst. Fahrzeugnutzer wünschen neben der Verfügbarkeit von Musik- oder Videostreams auch die Möglichkeit Daten aus dem Internet auf ein Benutzerendgerät (z.B. Smartphone, Tablet-Computer oder Laptop) herunterzuladen.

Um Datendienste der vorgenannten Art bereitstellen zu können, sind stabile und hochratige Verbindungen zu zellularen Netzwerken (z.B. Universal Mobile Telecommunications System, UMTS,- oder Long Term Evolution, LTE, -Netzwerke) notwendig. Die Verbindungsqualität kann dabei mitunter schwankend sein. Bei der Durchfahrt von Gebieten mit schlechter (geringer) Netzabdeckung können neben einer geringen Datenrate mitunter sogar Verbindungsabbrüche auftreten. Um Phasen geringer Datenrate bzw. Verbindungsabbrüche auszugleichen, weisen Applikationen bzw. Software, die einen Datenstrom von einem Server abrufen, für gewöhnlich einen Pufferspeicher auf, um Daten vorzuhalten. Die internen Pufferspeicher der Applikationen bzw. Software sind dabei jedoch oftmals hinsichtlich ihrer Größe stark limitiert, so dass bei längeren Phasen geringer Datenrate bzw. bei längeren Verbindungsabbrüchen der Pufferspeicher leer laufen kann. Somit kann es zu Unterbrechung eines Musik- oder Videostreams bzw. eines Downloads kommen. Von einem Benutzer solcher Dienstleistungen im Fahrzeug kann dies als störend wahrgenommen werden - insbesondere, wenn der Benutzer weitere Schritte unternehmen muss, um den Musik- oder Videostream bzw. Download wieder aufzunehmen.

Für einen Fahrzeugnutzer könnte es daher wünschenswert sein, den Datenstrom vom Server zu der auf dem Benutzerendgerät ausgeführten Applikation bzw. Software zu verbessern bzw. robuster zu gestalten.

Die Druckschrift US 8,976,782 B1 zeigt ein Kommunikationssystem zum Bereitstellen von Telefoniekommunikation über kombinierte leitungs- und packetvermittelte Netzwerke. Um die Konnektivität zwischen den Netzwerken zu gewährleisten, umfasst das Kommunikationssystem mehrere Gateways. Jedoch sind der Druckschrift keinerlei Hinweise zu entnehmen, um einen Datenstrom von einem Server zu einer Applikation bzw. Software robuster zu gestalten.

In der Druckschrift EP 1 011 244 A2 ist ein Verfahren gezeigt, um eine Hypertext Transfer Protocol (HTTP)- Verbindungsanfrage, die an einen Server gerichtet ist, zu einem Proxy Cache umzuleiten. Jedoch ist auch der Druckschrift EP 1 011 244 A2 keinerlei Hinweise zu entnehmen, um einen Datenstrom von einem Server zu einer Applikation bzw. Software robuster zu gestalten.

Die Druckschriften US 2015/0016244 A1 und WO 2007/136621 A2 zeigen einen mobilen Router. Der mobile Router baut, wenn ein Benutzerendgerät eine TCP-Sitzung mit einem Server aufbauen möchte, eine erste Sitzung zwischen sich und dem Benutzerendgerät sowie eine zweite Sitzung zwischen sich und dem Server auf. Damit kann bei einem Abbruch der Verbindung zwischen dem mobilen Router und dem Server einer Applikation auf dem Benutzerendgerät der Eindruck vermittelt werden, die Verbindung zum Server würde fortbestehen. Jedoch können auch mit dem in den Druckschriften US 2015/0016244 A1 und WO 2007/136621 A2 gezeigten mobilen Router keine längeren Phasen geringer Datenrate bzw. Verbindungsabbrüche überbrückt werden, so dass auch diese Druckschriften letztlich keinerlei Anregung enthalten, um einen Datenstrom von einem Server zu einer Applikation bzw. Software robuster zu gestalten.

Druckschrift EP 2 942 971 A1 schlägt ein Verfahren zum Streamen in einem sich bewegenden Verkehrsmittel vor. Jedoch ist auch der Druckschrift EP 2 942 971 A1 keinerlei Hinweis zu entnehmen, um eine hochratige Verbindung zu einem Server besser auszulasten.

In Druckschrift XP 011115856 wird ein Zwischenpuffern von Daten eines Streams in einem Proxy-Server vorgeschlagen. Jedoch ist auch der Druckschrift XP 011115856 keinerlei Hinweise zu entnehmen, um einen Datenstrom von einem Server zu einer Applikation bzw. Software im Fahrzeug robuster zu gestalten.

Es besteht somit ein Erfordernis, einem Benutzer eines Kraftfahrzeugs eine verbesserte Möglichkeit bereitzustellen, um einen Datenstrom von einem Server abzurufen.

Die vorliegende Erfindung ermöglicht dies durch ein Verfahren gemäß Anspruch 1 und ein System gemäß Anspruch 14. Dabei umfasst das Verfahren ein Empfangen einer Anfrage der Applikation an den Server, eine Verbindung zwischen der Applikation und dem Server aufzubauen, durch einen in einem Fahrzeug angeordneten Netzwerkzugriffspunkt. Die Verbindung des Benutzerendgeräts mit dem Server soll somit über den im Fahrzeug befindlichen Netzwerkzugriffspunkt aufgebaut werden. Bei einem Netzwerkzugriffspunkt handelt es sich allgemein um eine HardwareKomponente, die es einem Benutzerendgeräte ermöglicht, sich mit einem ausgewählten Netzwerk gemäß einem oder mehrerer Übertragungsstandards zu verbinden. Bei dem Netzwerkzugriffspunkt kann es sich beispielsweise um einen im Fahrzeug angeordneten Router handeln, der eine Anbindung des Benutzerendgeräts an ein zellulares Netzwerk (z.B. ein Universal Mobile Telecommunications System, UMTS, oder ein Long Term Evolution, LTE, - Netzwerk) und somit an das Internet erlaubt. Die Anbindung des Benutzerendgeräts an den Netzwerkzugriffspunkt kann über verschiedene Übertragungsstandards erfolgen. So kann die Anbindung z.B. über ein Wireless Local Area Network (WLAN) nach dem IEEE 802.11 Standard, eine Bluetooth-Verbindung oder auch eine Near Field Communication (NFC) - Verbindung erfolgen. Netzwerkzugriffspunkte, die eine Anbindung eines Benutzerendgeräts über ein WLAN erlauben, sind auch als WLAN-Hotspots bekannt.

Ferner umfasst das Verfahren ein Aufbauen einer ersten Verbindung zwischen dem Netzwerkzugriffspunkt und der Applikation sowie ein Aufbauen einer zweiten Verbindung zwischen dem Netzwerkzugriffspunkt und dem Server. Mit anderen Worten: Es wird keine direkte Verbindung zwischen der auf dem Benutzerendgerät ausgeführten Applikation und dem Server aufgebaut. Vielmehr wird die Verbindung in zwei einzelne Verbindungen aufgetrennt. Durch das Auftrennen in zwei separate Verbindungen kann somit ein weiterer Freiheitsgrad für das Abrufen des Datenstroms geschaffen werden.

Daher umfasst das Verfahren ferner ein Anfordern und Empfangen einer ersten Teilmenge des Datenstroms durch den Netzwerkzugriffspunkt von dem Server über die zweite Verbindung sowie ein Speichern der ersten Teilmenge in einem Pufferspeicher des Netzwerkzugriffspunktes. Für das Anfordern der Teilmenge des Datenstroms kann der Netzwerkzugriff auf die in der Anfrage der Applikation an den Server enthaltenen Informationen zurückgreifen. So kann der Netzwerkzugriffspunkt Anfragen an den Server generieren, die Informationen zum Abruf des in der Anfrage der Applikation enthaltenen Datenstroms enthalten, dabei jedoch den Netzwerkzugriffspunkt als Quelle der Anfrage ausweisen. Der Netzwerkzugriffspunkt kann somit unabhängig von einer Datenanforderung durch die Applikation Teilmengen des Datenstroms von dem Server anfordern und diese in dem Pufferspeicher Zwischenspeichern.

Nach einem Empfangen einer Aufforderung der Applikation an den Server, eine zweite Teilmenge des Datenstroms an die Applikation zu senden, durch den Netzwerkzugriffspunkt, wird die zweiten Teilmenge des Datenstroms, die von der ersten Teilmenge umfasst ist, von dem Pufferspeicher an die Applikation über die erste Verbindung gesendet. Somit werden die in dem Pufferspeicher vorgehalten Daten an die Applikation gesendet. Somit können auch bei einem zwischenzeitlichen Abbruch der Verbindung zum Server oder einer geringen momentanen Datenrate zwischen Server und Netzwerkzugriffspunkt ausreichend Daten durch die Applikation abgerufen werden.

Zudem fordert der Netzwerkzugriffspunkt weitere Teilmengen des Datenstroms von dem Server mit einer Frequenz an, die höher ist als die Frequenz, mit der er weitere Aufforderungen der Applikation an den Server, eine Teilmenge des Datenstroms an die Applikation zu senden, empfängt.

Das Auftrennen der Verbindung zum Server in zwei Verbindungen eröffnet somit einen weiteren Freiheitsgrad. Die Flusskontrolle gegenüber dem Server wird nun nichtmehr durch die Applikation gesteuert, sondern über den Netzwerkzugriffspunkt. Benötigt die Applikation aktuell keine oder wenige Daten (z.B. weil ihr lokaler Pufferspeicher gefüllt ist und sie diesen nicht oder nur langsam abarbeitet), kann über den Netzwerkzugriffpunkt abgeholfen. Dieser hält einen eigenen Pufferspeicher vor und dem Server kann per Flusskontrolle mitgeteilt werden, dass weitere Daten akzeptiert werden. Dieser kann somit aufgefordert werden, weitere Daten zu schicken. Erlaubt die Mobilfunkverbindung zu diesem Zeitpunkt eine Datenübertragung, kann diese nun zum Vorteil des Benutzers des Benutzerendgeräts genutzt werden, um Daten lokal im Fahrzeug zwischenzuspeichern. Bei einer Flusskontrolle durch die Applikation würde ein voller Applikationspuffer eine Übertragung der Daten ins Fahrzeug verhindern, so dass z.B. bei einem längeren Abbruch der Verbindung der lokale Pufferspeicher der Applikation womöglich leerliefe. Angenommen, die Daten wären solche eines Musik- oder Videostream, würde der Musik- oder Videostream unterbrochen oder abgebrochen. Ein solches frustrierendes Erlebnis für einen Nutzer kann somit vermieden werden.

Durch das häufigere Anfordern von Daten durch den Netzwerkzugriffspunkt kann - selbst bei identischer Größe der jeweiligen Teilmengen, die dem Netzwerkzugriffspunkt über die zweite Verbindung zugehen bzw. von diesem über die erste Verbindung abfließen - sichergestellt werden, dass in dem Pufferspeicher mehr Daten gespeichert werden als abfließen. Mit anderen Worten: Der Pufferspeicher wird durch das häufigere Anfordern von Daten von dem Server gefüllt. Auf diese Weise kann eine hochratige Verbindung zwischen Netzwerkzugriffspunkt und Server besser ausgelastet werden, so dass eine große Menge gepufferter (zwischengespeicherter) Daten für den Abruf durch die Applikation bereitgestellt werden kann. Wird durch den Netzwerkzugriffspunkt zudem der Server als Quelle der zweiten Teilmenge ausgewiesen, kann die Applikation zudem nicht erkennen, dass die Daten eigentlich aus dem Pufferspeicher stammen. Die Zwischenspeicherung der Serverdaten ist somit für die Applikation nicht erkennbar. Gemäß einigen Ausführungsbeispielen der vorliegenden Erfindung ist daher als Ursprungsnetzwerkadresse der zweiten Teilmenge des Datenstroms die Netzwerkadresse des Servers angegeben. Der Netzwerkzugriffspunkt stellt somit für die Applikation effektiv einen transparenten Proxy dar. Da der Netzwerkzugriffspunkt effektiv einen transparenten Proxy darstellt, sind auch keine Modifikationen auf Serverseite oder Applikationsseite nötig.

In einigen Ausführungsbeispielen der vorliegenden Erfindung umfasst das Verfahren ein Löschen der zweiten Teilmenge des Datenstroms aus dem Pufferspeicher sowie ein Anfordern und Empfangen einer dritten Teilmenge des Datenstroms durch den Netzwerkzugriffspunkt von dem Server über die zweite Verbindung. Die dritte Teilmenge folgt dabei innerhalb des Datenstroms logisch auf die erste Teilmenge. Nach dem Senden der zweiten Teilmenge wird diese unmittelbar aus dem Pufferspeicher gelöscht, um Speicherplatz zur Speicherung weiterer vom Server empfangener Teilmengen des Datenstroms zu schaffen (z.B. der dritten Teilmenge). Das Anfordern und Empfangen der dritten Teilmenge des Datenstroms kann dabei vor, während oder nach dem Löschen der zweiten Teilmenge aus dem Pufferspeicher geschehen. Somit kann der Pufferspeicher unabhängig von dem Abfluss der Daten an die Applikation weiter gefüllt werden.

Gemäß einigen Ausführungsbeispielen der vorliegenden Erfindung umfasst das Verfahren ferner ein Empfangen einer Aufforderung der Applikation an den Server, eine vierte Teilmenge des Datenstroms an die Applikation zu senden, durch den Netzwerkzugriffspunkt. Die vierte Teilmenge innerhalb des Datenstroms folgt dabei logisch auf die zweite Teilmenge, wobei die vierte Teilmenge von dem noch in dem Pufferspeicher gespeicherten Rest der ersten Teilmenge, dem noch in dem Pufferspeicher gespeicherten Rest der ersten Teilmenge sowie der dritten Teilmenge oder der dritten Teilmenge umfasst ist. Weiterhin umfasst das Verfahren ein Senden der vierten Teilmenge des Datenstroms von dem Pufferspeicher an die Applikation über die erste Verbindung. Somit kann der Applikation aus den in dem Pufferspeicher gespeicherten Daten bei Bedarf das nächste benötigte Datenfragment bereitgestellt werden.

Um eine möglichst gute Pufferung zu erreichen, fordert der Netzwerkzugriffspunkt in einigen Ausführungsbeispielen der vorliegenden Erfindung weitere Teilmengen des Datenstroms von dem Server an, bis der Pufferspeicher voll ist. Auf dies Weise kann erreicht werden, dass möglichst viele Daten für den Abruf durch die Applikation in dem Pufferspeicher vorgehalten werden können. Auch kann dadurch eine hochratige Verbindung zwischen Netzwerkzugriffspunkt und Server ausgelastet werden, um ein für einen Benutzer ein optimales Entertainmenterlebnis zu erreichen.

Gemäß einigen Ausführungsbeispielen der vorliegenden Erfindung kann die erste Verbindung und/oder die zweite Verbindung auf dem Internet Protokoll (IP) und dem Transmission Control Protocol (TCP) basiert. Dadurch kann sichergestellt werden, dass eine Kommunikation mit allen gängigen Servern bzw. Benutzerendgeräten gewährleistet ist.

In einigen Ausführungsbeispielen der vorliegenden Erfindung kann - wie oben bereits angedeutet - die erste Verbindung über ein drahtloses lokales Netzwerk (WLAN) aufgebaut werden. Dadurch kann eine hohe Datenrate zwischen dem Netzwerkzugriffspunkt und dem Benutzerendgeräte bzw. der Applikation sichergestellt werden. Weiterhin kann eine Kommunikation mit allen gängigen Benutzerendgeräten gewährleistet werden, da diese für gewöhnlich WLAN-Verbindungen unterstützen. Ebenso kann die zweite Verbindung aber z.B. auch über eine Bluetooth-Verbindung aufgebaut werden.

Gemäß einigen Ausführungsbeispielen der vorliegenden Erfindung kann - wie oben bereits angedeutet - die zweite Verbindung über ein zellulares Netzwerk (z.B. UMTS, LTE) aufgebaut sein. Zellulare Netzwerke decken mittlerweile große Teile der Landschaft ab, so dass durch die Verwendung eines zellularen Netzwerks für die Verbindung zwischen Netzwerkzugriffspunkt und Server eine großflächige Konnektivität ermöglicht wird.

Gemäß einigen Ausführungsbeispielen der vorliegenden Erfindung kann die Datenrate der zweiten Verbindung zwischen dem Netzwerkzugriffspunkt und dem Server höher sein als die der ersten Verbindung zwischen dem Netzwerkzugriffspunkt und der Applikation. Dadurch kann sichergestellt werden, dass der Pufferspeicher schneller mit vom Server empfangenen Daten gefüllt wird, als Daten vom Pufferspeicher zu der Applikation gesendet werden. Ein Leerlaufen des Pufferspeichers des Netzwerkzugriffspunktes bei gleichzeitigem Empfangen von Daten vom Server und Senden von Daten an die Applikation kann somit vermieden werden.

In einigen Ausführungsbeispielen der vorliegenden Erfindung kann die erste Teilmenge des Datenstroms größer als die zweite Teilmenge sein. Mit anderen Worten: Es werden größere Teilmengen vom Server empfangen, als an die Applikation abgegeben werden. Ein Leerlaufen des Pufferspeichers des Netzwerkzugriffspunktes bei gleichzeitigem Empfangen von Daten vom Server und Senden von Daten an die Applikation kann somit wiederum vermieden werden.

Gemäß einigen Ausführungsbeispielen der vorliegenden Erfindung kann das Verfahren ferner ein Bereitstellen des Pufferspeichers durch allokieren von Speicherplatz einer Speichervorrichtung des Netzwerkzugriffspunktes für die Applikation umfassen. Der vorhandenen Speicherplatz der Speichervorrichtung des Netzwerkzugriffspunktes kann somit dynamisch und anwendungsangepasst für die Bereitstellung eines Pufferspeichers für die Applikation genutzt werden. Insbesondere können durch das allokieren mehrere Pufferspeicher für verschiedene Applikationen bereitgestellt werden. Die Größe eines jeweiligen Pufferspeichers kann dabei vorgegeben sein oder variabel. So kann die Größe des Pufferspeichers z.B. an den Typ der Applikation angepasst sein. Beispielsweise kann ein Pufferspeicher für eine Video-Streaming-Applikation größer sein als ein Pufferspeicher für eine Musik-Streaming-Applikation, da für das Video-Streaming mehr Daten pro Zeiteinheit übertragen werden müssen.

In einigen Ausführungsbeispielen der vorliegenden Erfindung hängt die Größe des Pufferspeichers von einem verfügbaren Speicherplatz in der Speichervorrichtung ab. Die Speichervorrichtung kann z.B. eine Festplatte, ein Flash-Speicher, ein Solid-State-Drive oder eine Kombination davon sein. So kann u.a. sichergestellt werden, dass bei einem nur geringen verfügbaren Speicherplatz dieser nicht vollständig oder fast ausschließlich für den Pufferspeicher für eine einzelne Applikation verwendet wird, wie es bei einer festen Größe des Pufferspeichers der Fall sein könnte. Vielmehr kann die Größe des Pufferspeichers mit dem verfügbaren Speicherplatz skaliert werden, so dass auch bei einem geringen verfügbaren Speicherplatz mehrere Pufferspeicher in der Speichervorrichtung bereitgestellt werden können.

Gemäß einigen Ausführungsbeispielen der vorliegenden Erfindung kann die die Größe des Pufferspeichers auch von einem Zustand des zellularen Netzwerks abhängen, wenn die zweite Verbindung über ein zellulares Netzwerk aufgebaut wird. Unter dem Zustand des zellularen Netzwerks kann eine Verfügbarkeit, eine maximale Datenrate, eine Auslastung, eine Latenz, ein Jitter etc. des zellularen Netzwerks oder eine Kombination davon verstanden werden. Damit kann der Pufferspeicher variabel an die tatsächlichen Bedingungen der Verbindung zwischen Netzwerkzugriffspunkt und Server angepasst werden. Je nach Zustand des zellularen Netzwerks kann daher ein Pufferspeicher mit angepasster Größe bereitgestellt werden.

In einigen Ausführungsbeispielen der vorliegenden Erfindung ist der Zustand des zellularen Netzwerks ein momentaner und/oder ein prädizierter, zukünftiger Zustand des zellularen Netzwerks. Der momentane Zustand des zellularen Netzwerks kann z.B. von dem Netzwerkzugriffspunt selbst oder einer sonstigen Einrichtung des Fahrzeugs, die auf das zellulare Netzwerk zugreifen kann, erfasst bzw. bestimmt werden. Auch können von einem Betreiber des zellularen Netzwerks oder einem Hersteller des Fahrzeugs entsprechende Informationen bereitgestellt werden. Der prädizierte, zukünftige Zustand des zellularen Netzwerks gibt eine Vorhersage über den zukünftigen Zustand des zellularen Netzwerks wieder. Ein solcher kann z.B. im Fahrzeug selbst oder durch einen Online-Dienst eines Herstellers des Fahrzeugs aus vorangegangenen Messungen während des Betriebs des Fahrzeugs bestimmt werden. So kann z.B. aus alten Routendaten des Navigationssystems und Messungen des Netzwerkzustands entlang der gefahrenen Routen eine Vorhersage über den wahrscheinlichen Zustand des zellularen Netzwerks bestimmt werden. Insbesondere bei einem mehrmaligen oder häufigeren Abfahren einer Route (z.B. zur Arbeit und zurück), kann eine zuverlässige Vorhersage über den vermeintlichen Zustand des zellularen Netzwerks entlang der Route bestimmt werden. Ebenso können wiederum Informationen über den prädizierten, zukünftigen Zustand des zellularen Netzwerks von einem Netzwerkbetreiber oder einem Hersteller des Fahrzeugs bereitgestellt werden. Informationen über den momentanen und/oder zukünftigen Zustand des zellularen Netzwerks können aber auch von anderen Fahrzeugen empfangen werden mittels Car-to-Car-Kommunikation. Stellt z.B. ein Fahrzeug einen Ausfall des zellularen Netzwerks in einem Bereich fest, kann es diese Information an andere Fahrzeuge weitergeben, so dass diese ihren Pufferspeicher entsprechend anpassen können. Zeigt der prädizierte, zukünftige Zustand des zellularen Netzwerks z.B. einen Ausfall oder eine niedrige Datenrate entlang eines Teils der Route an, kann der Pufferspeicher beispielsweise größer gewählt werden. Aufgrund des größer gewählten Pufferspeichers können so viele Daten zwischengespeichert werden, dass der Applikation ausreichend Daten für die gesamte Dauer der Durchquerung des Teils der Route mit schlechter Datenrate bzw. ohne Netzempfang bereitgestellt werden können.

Die oben beschriebene Funktionalität kann dabei auf neuen zusätzlichen Hardwarekomponente des Netzwerkzugriffspunktes (z.B. ein WLAN-Hotspot), wie einer CPU (Central Processing Unit) und einer SSD oder dergleichen, ablaufen. Es versteht sich von selbst, dass gemäß einigen Ausführungsbeispielen der vorliegenden Erfindung die Funktionalität nicht durch ein zusätzliches Hardware-Bauteil in Form eines weiteren Prozessors und einer SSD oder dergleichen implementiert werden muss. Gemäß einiger Ausführungsbeispiele ist es auch möglich, die Funktionalität durch ein einfaches Software-Update für eine bereits existierende CPU bzw. eine bereits existierende programmierbare Hardwarekomponente und einen bereits existierenden Speicher zu implementieren. Daher umfassen Ausführungsbeispiele der vorliegenden Erfindung auch ein Programm mit einem Programmcode zum Durchführen des oben beschriebenen Verfahrens, wenn der Programmcode auf einem Computer, einem Prozessor oder einer programmierbaren Hardwarekomponente abläuft bzw. dort ausgeführt wird.

Die Erfindung umfasst in einem weiteren Aspekt ein Kraftfahrzeug mit einem Netzwerkzugriffspunkt, um durch eine auf einem Benutzerendgerät ausgeführte Applikation einen Datenstrom von einem Server über den Netzwerkzugriffspunkt abzurufen. Bei dem Netzwerkzugriffspunkt kann es sich z.B. um einen WLAN-Hotspot im Fahrzeug handeln. Der Netzwerkzugriffspunkt umfasst dabei einen Pufferspeicher. Der Pufferspeicher kann z.B. durch allokieren von Speicherplatz einer Speichervorrichtung des Netzwerkzugriffspunktes für die Applikation bereitgestellt werden. Bei der Speichervorrichtung kann es sich z.B. um eine Festplatte, einen Flash-Speicher, ein Solid-State-Drive oder eine Kombination davon handeln. Gemäß einigen Ausführungsbeispielen der vorliegenden Erfindung weist der Pufferspeicher einen Speicherplatz zwischen 100 Megabyte und 1,5 Gigabyte auf. In einem Pufferspeicher des vorgenannten Größenbereichs können Daten zur Wiedergabe eines Video-Streams einer Länge von etwa zehn Sekunden bis hin zu mehreren Minuten zwischengespeichert werden, so dass selbst mehrere Minuten andauernde Verbindungsabbrüche zwischen dem Netzwerkzugriffspunkt und dem Server überbrückt werden können.

Weiterhin ist der Netzwerkzugriffspunkt eingerichtet, eine Anfrage der Applikation an den Server, eine Verbindung zwischen der Applikation und dem Server aufzubauen, zu empfangen. Ferner, eine erste Verbindung zwischen dem Netzwerkzugriffspunkt und der Applikation aufzubauen sowie eine zweite Verbindung zwischen dem Netzwerkzugriffspunkt und dem Server aufzubauen. Auch ist der Netzwerkzugriffspunkt eingerichtet, eine erste Teilmenge des Datenstroms von dem Server über die zweite Verbindung anzufordern und zu empfangen sowie die erste Teilmenge in dem Pufferspeicher zu speichern. Der Netzwerkzugriffspunkt ist weiterhin eingerichtet, eine Aufforderung der Applikation an den Server, eine zweite Teilmenge des Datenstroms an die Applikation zu senden, zu empfangen. Dabei ist die zweite Teilmenge von der ersten Teilmenge umfasst. Weiterhin ist der Netzwerkzugriffspunkt eingerichtet, die zweite Teilmenge des Datenstroms von dem Pufferspeicher an die Applikation über die erste Verbindung zu senden.

Bei Verwendung des erfindungsgemäßen Fahrzeugs wird keine direkte Verbindung zwischen der auf dem Benutzerendgerät ausgeführten Applikation und dem Server aufgebaut. Vielmehr wird die Verbindung durch den Netzwerkzugriffspunkt in zwei einzelne Verbindungen aufgetrennt. Durch das Auftrennen in zwei separate Verbindungen kann somit ein weiterer Freiheitsgrad für das Abrufen des Datenstroms geschaffen werden. Der Netzwerkzugriffspunkt kann somit nunmehr unabhängig von einer Datenanforderung durch die Applikation Teilmengen des Datenstroms von dem Server anfordern und diese in dem Pufferspeicher zwischenspeichern. Das heißt, in dem Pufferspeicher können Daten vorgehalten werden, die bei Bedarf an die Applikation gesendet werden können. Somit können auch bei einem zwischenzeitlichen Abbruch der Verbindung zum Server oder einer geringen momentanen Datenrate zwischen Server und Netzwerkzugriffpunkt ausreichend Daten für den Abruf durch die Applikation vorgehalten werden, bis die Verbindung zum Server wiederhergestellt eine höhere Datenrate zwischen Server und Netzwerkzugriffpunkt erreicht wird.

Gemäß weiteren Ausführungsbeispielen der vorliegenden Erfindung kann der Netzwerkzugriffspunkt eingerichtet sein, einen oder mehrere der weiteren, oben genannten Verfahrensschritte auszuführen.

Ausführungsbeispiele der vorliegenden Erfindung werden nachfolgend, Bezug nehmend auf die beigefügten Figuren, näher erläutert. Es zeigen:
Fig. 1 zeigt ein Flussdiagram eines Ausführungsbeispiels eines Verfahrens zum Abrufen eines Datenstroms von einem Server; und
Fig. 2 zeigt ein Ausführungsbeispiel eines Kraftfahrzeugs.

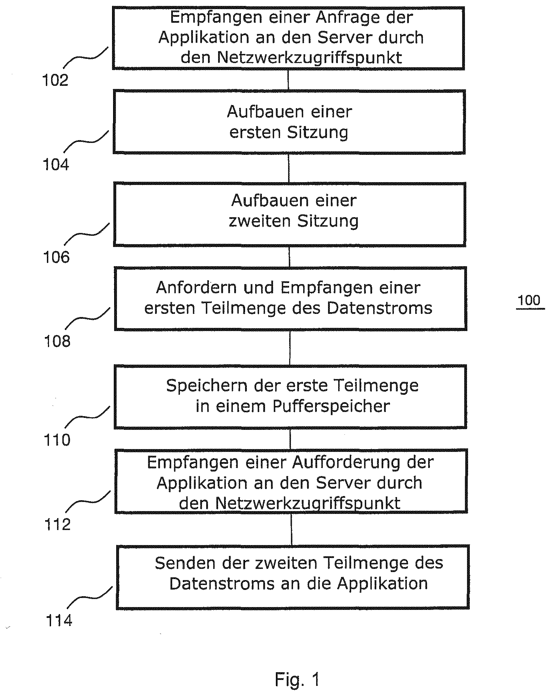

In Fig.1 ist ein Verfahren 100 zum Abrufen eines Datenstroms von einem Server durch eine auf einem Benutzerendgerät ausgeführte Applikation gezeigt.

Das Verfahren 100 umfasst dabei ein Empfangen 102 einer Anfrage der Applikation an den Server, eine Verbindung zwischen der Applikation und dem Server aufzubauen, durch einen in einem Fahrzeug angeordneten Netzwerkzugriffspunkt.

Weiterhin umfasst das Verfahren 100 ein Aufbauen 104 einer ersten Verbindung zwischen dem Netzwerkzugriffspunkt und der Applikation sowie ein Aufbauen 106 einer zweiten Verbindung zwischen dem Netzwerkzugriffspunkt und dem Server. Das Abrufen des Datenstroms vom Server wird somit also mittels zweier getrennter Verbindungen statt einer einzelnen Verbindungen realisiert. Durch das Auftrennen in zwei separate Verbindungen kann ein weiterer Freiheitsgrad für das Abrufen des Datenstroms geschaffen werden.

Das Verfahren 100 umfasst ferner ein Anfordern und Empfangen 108 einer ersten Teilmenge des Datenstroms durch den Netzwerkzugriffspunkt von dem Server über die zweite Verbindung sowie ein Speichern 110 der ersten Teilmenge in einem Pufferspeicher des Netzwerkzugriffspunktes. Der Netzwerkzugriffspunkt kann somit unabhängig von einer Datenanforderung durch die Applikation Teilmengen des Datenstroms von dem Server anfordern und diese in dem Pufferspeicher zwischenspeichern. Somit kann im Fahrzeug ein lokaler Zwischenspeicher für die Serverdaten bereitgestellt werden.

Weiterhin umfasst das Verfahren 100 ein Empfangen 112 einer Aufforderung der Applikation an den Server, eine zweite Teilmenge des Datenstroms an die Applikation zu senden, durch den Netzwerkzugriffspunkt. Die zweite Teilmenge ist dabei von der ersten Teilmenge umfasst. Als Reaktion auf die Aufforderung umfasst das Verfahren 100 ein Senden 114 der zweiten Teilmenge des Datenstroms von dem Pufferspeicher an die Applikation über die erste Verbindung. Die in dem Pufferspeicher vorgehaltenen Daten werden somit an die Applikation gesendet. Somit können auch bei einem zwischenzeitlichen Abbruch der Verbindung zum Server oder einer geringen momentanen Datenrate zwischen Server und Netzwerkzugriffpunkt ausreichend Daten für den Abruf durch die Applikation vorgehalten werden, bis die Verbindung zum Server wiederhergestellt oder eine höhere Datenrate zwischen Server und Netzwerkzugriffpunkt erreicht wird. Der Applikation können somit kontinuierlich ausreichend Daten zum Abruf zur Verfügung gestellt werden.

Weitere Details und Aspekte des Verfahrens sind vorangehend in Zusammenhang mit einem oder mehreren Ausführungsbeispielen beschrieben. Das Verfahren kann eines oder mehrere optionale Merkmale gemäß einem oder mehreren der vorbeschriebenen Ausführungsbeispiele umfassen.

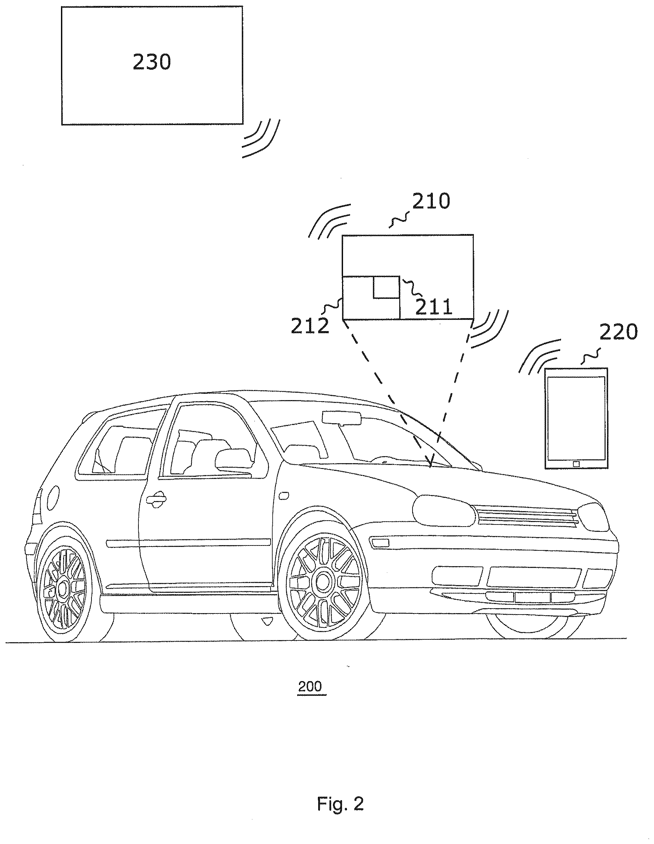

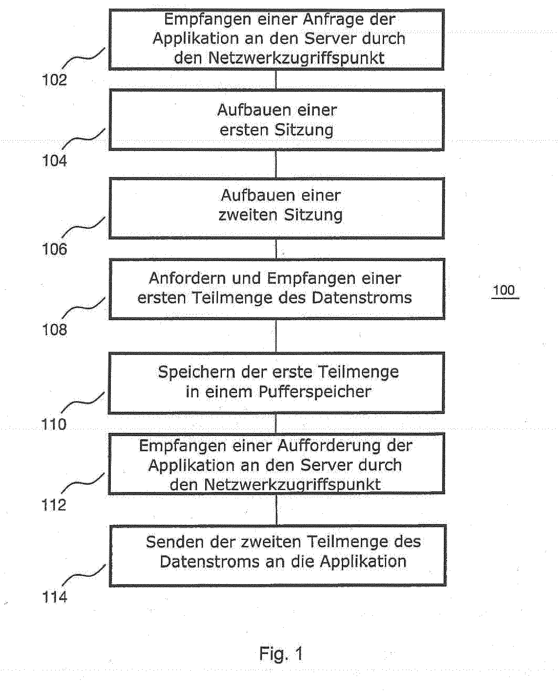

In Fig. 2 ist ein Fahrzeug 200 gezeigt, das einen Netzwerkzugriffpunkt 210 aufweist. Der Netzwerkzugriffspunkt 210 kann beispielsweise ein im Fahrzeug angebrachter WLAN-Hotspot sein. Der Netzwerkzugriffpunkt 210 umfasst eine Speichervorrichtung 212 (z.B. ein Flash-Speicher oder ein SSD).

Will nun ein Benutzer über eine Applikation eines Benutzerendgerät 220 (z.B. ein Tablet oder eine im Fahrzeug 200 angeordnete Rear-Seat-Entertainment-Einrichtung) einen Datenstrom von einem Server 230 abrufen, kann der Netzwerkzugriffpunkt 210 verwendet werden, um eine robusten Datenabruf zu gewährleisten. Dazu kann der Netzwerkzugriffpunkt 210 sowohl mit dem Server 230 als auch mit dem Benutzerendgerät 220 drahtlos kommunizieren. Beispielsweise kann der Netzwerkzugriffpunkt 210 eingerichtet sein, über ein zellulares Netzwerk mi dem Server 230 und über eine WLAN-Verbindung mit dem Benutzerendgerät 220 zu kommunizieren.

Nachdem der Netzwerkzugriffpunkt 210 eine Anfrage der Applikation an den Server 230, eine Verbindung zwischen der Applikation und dem Server 230 aufzubauen, empfängt, baut er eine erste Verbindung zwischen dem Netzwerkzugriffspunkt 210 und der Applikation auf. Zudem baut der Netzwerkzugriffpunkt 210 eine zweite Verbindung zwischen dem Netzwerkzugriffspunkt 210 und dem Server 230 auf. Die erste Verbindung als auch die zweite Verbindung sind dabei IP / TCP basiert, so dass eine Kommunikation mit allen gängigen Servern bzw. Benutzerendgeräten gewährleistet ist.

Anschließend fordert der Netzwerkzugriffpunkt 210 eine erste Teilmenge des Datenstroms von dem Server 230 über die zweite Verbindung an und empfängt diese. Zum Anfordern des Datenstroms als auch zum Aufbau der zweiten Verbindung kann der Netzwerkzugriffspunkt 210 auf die in der Anfrage der Applikation an den Server 230 enthaltenen Informationen zurückgreifen. Die vom Server 230 empfange erste Teilmenge des Datenstroms speichert der Netzwerkzugriffspunkt 210 in einem Pufferspeicher 211. Der Pufferspeicher 211 ist durch Allokieren von Speicherplatz der Speichervorrichtung 212 für die Applikation bereitgestellt.

Empfängt der Netzwerkzugriffspunkt 210 nunmehr eine Aufforderung der Applikation an den Server 230, eine von der ersten Teilmenge umfasst zweite Teilmenge des Datenstroms an die Applikation zu senden, sendet er die zweite Teilmenge des Datenstroms von dem Pufferspeicher 211 an die Applikation über die erste Verbindung. Das Auftrennen der Verbindung zum Server 230 in zwei Verbindungen eröffnet einen weiteren Freiheitsgrad. Die Flusskontrolle gegenüber dem Server 230 wird nun nichtmehr durch die Applikation gesteuert, sondern über den Netzwerkzugriffspunkt 210. Vielmehr hält der Netzwerkzugriffspunkt 210 über den Pufferspeicher 211 Daten für die Applikation im Fahrzeug vor. Somit können auch bei einem zwischenzeitlichen Abbruch der Verbindung zum Server 230 oder einer geringen momentanen Datenrate zwischen Server 230 und Netzwerkzugriffspunkt 210 ausreichend Daten durch die Applikation abgerufen werden. Angenommen die Daten wären solche eines Musik- oder Videostream, kann ein Unterbrechen oder Abbrechen des Musik- oder Videostream bei einem Abbruch der Verbindung zum Server 230 oder einer geringen momentanen Datenrate zwischen Server 230 und Netzwerkzugriffspunkt 210 vermieden werden.

Als Ursprungsnetzwerkadresse der zweiten Teilmenge des Datenstroms gibt der Netzwerkzugriffspunkt 210 die Netzwerkadresse des Servers 230 an. Der Netzwerkzugriffspunkt 210 stellt somit für die Applikation effektiv einen transparenten Proxy dar. Da der Netzwerkzugriffspunkt 210 effektiv einen transparenten Proxy darstellt, geht die Applikation von einem Empfang der Daten direkt vom Server aus. Daher sind keine Anpassungen der Applikation an das vorgeschlagene Verfahren nötig.

Der Netzwerkzugriffspunkt 210 fordert zudem weitere Teilmengen des Datenstroms von dem Server 230 mit einer Frequenz an, die höher ist als die Frequenz, mit der er weitere Aufforderungen der Applikation an den Server 230, eine Teilmenge des Datenstroms an die Applikation zu senden, empfängt. Der Netzwerkzugriffspunkt 210 fordert dabei weitere Teilmengen des Datenstroms von dem Server 230 an, bis der Pufferspeicher 211 voll ist. Durch das häufigere Anfordern von Daten durch den Netzwerkzugriffspunkt 210 kann sichergestellt werden, dass in dem Pufferspeicher 211 mehr Daten gespeichert werden als abfließen. Auf diese Weise kann eine hochratige Verbindung zwischen Netzwerkzugriffspunkt 210 und Server 230 ausgelastet werden, so dass eine große Menge gepufferter (zwischengespeicherter) Daten für den Abruf durch die Applikation bereitgestellt werden kann.

Das Fahrzeug 200 ermöglicht einem Benutzer des Kraftfahrzeugs 200 daher einen verbesserten und ausfallsichereren Abruf eines Datenstroms von dem Server 230.

### Bezugszeichenliste

- 100: Verfahren zum Abrufen eines Datenstroms
- 102: Empfangen einer Anfrage der Applikation an den Server
- 104: Aufbauen einer ersten Verbindung
- 106: Aufbauen einer zweiten Verbindung
- 108: Anfordern und Empfangen einer ersten Teilmenge des Datenstroms
- 110: Speichern der ersten Teilmenge in einem Pufferspeicher
- 112: Empfangen einer Aufforderung der Applikation an den Server
- 114: Senden der zweiten Teilmenge des Datenstroms an die Applikation
- 200: Fahrzeug
- 210: Netzwerkzugriffspunkt
- 211: Pufferspeicher
- 212: Speichervorrichtung
- 220: Benutzerendgerät
- 230: Server

## Patentansprüche

1. Verfahren (100) zum Abrufen eines Datenstroms von einem Server durch eine auf einem Benutzerendgerät ausgeführte Applikation, wobei das Verfahren folgende Schritte umfasst:
Empfangen (102) einer Anfrage der Applikation an den Server, eine Verbindung zwischen der Applikation und dem Server aufzubauen, durch einen in einem Fahrzeug angeordneten Netzwerkzugriffspunkt,
wobei die Anfrage der Applikation Information über den Datenstrom enthält;
Aufbauen (104) einer ersten Verbindung zwischen dem Netzwerkzugriffspunkt und der Applikation;
Aufbauen (106) einer zweiten Verbindung zwischen dem Netzwerkzugriffspunkt und dem Server;
Anfordern und Empfangen (108) einer ersten Teilmenge des Datenstroms durch den Netzwerkzugriffspunkt von dem Server über die zweite Verbindung;
Speichern (110) der ersten Teilmenge in einem Pufferspeicher des Netzwerkzugriffspunktes;
Empfangen (112) einer Aufforderung der Applikation an den Server, eine zweite Teilmenge des Datenstroms an die Applikation zu senden, durch den Netzwerkzugriffspunkt, wobei die zweite Teilmenge von der ersten Teilmenge umfasst ist; und
Senden (114) der zweiten Teilmenge des Datenstroms von dem Pufferspeicher an die Applikation über die erste Verbindung,
wobei der Netzwerkzugriffspunkt weitere Teilmengen des Datenstroms von dem Server mit einer höheren Frequenz anfordert, als er weitere Aufforderungen der Applikation an den Server, eine Teilmenge des Datenstroms an die Applikation zu senden, empfängt.

2. Verfahren nach Anspruch 1, ferner umfassend:
Löschen der zweiten Teilmenge des Datenstroms aus dem Pufferspeicher; und
Anfordern und Empfangen einer dritten Teilmenge des Datenstroms durch den Netzwerkzugriffspunkt von dem Server über die zweite Verbindung, wobei die dritte Teilmenge innerhalb des Datenstroms logisch auf die erste Teilmenge folgt.

3. Verfahren nach Anspruch 2, ferner umfassend:
Empfangen einer Aufforderung der Applikation an den Server, eine vierte Teilmenge des Datenstroms an die Applikation zu senden, durch den Netzwerkzugriffspunkt, wobei die vierte Teilmenge innerhalb des Datenstroms logisch auf die zweite Teilmenge folgt, und wobei die vierte Teilmenge von dem noch in dem Pufferspeicher gespeicherten Rest der ersten Teilmenge, dem noch in dem Pufferspeicher gespeicherten Rest der ersten Teilmenge sowie der dritten Teilmenge oder der dritten Teilmenge umfasst ist; und
Senden der vierten Teilmenge des Datenstroms von dem Pufferspeicher an die Applikation über die erste Verbindung.

4. Verfahren nach einem der vorhergehenden Ansprüche, wobei der Netzwerkzugriffspunkt weitere Teilmengen des Datenstroms von dem Server anfordert, bis der Pufferspeicher voll ist.

5. Verfahren nach einem der Ansprüche 1 bis 4, ferner umfassend:
Bereitstellen des Pufferspeichers durch allokieren von Speicherplatz einer Speichervorrichtung es Netzwerkzugriffspunktes für die Applikation.

6. Verfahren nach Anspruch 5, wobei die Größe des Pufferspeichers von einem verfügbaren Speicherplatz in der Speichervorrichtung abhängt.

7. Verfahren nach Anspruch 5 oder Anspruch 6, wobei die zweite Verbindung über ein zellulares Netzwerk aufgebaut wird, und wobei die Größe des Pufferspeichers von einem Zustand des zellularen Netzwerks abhängt.

8. Verfahren nach Anspruch 7, wobei der Zustand des zellularen Netzwerks ein momentaner und/oder ein prädizierter, zukünftiger Zustand des zellularen Netzwerks ist.

9. Verfahren nach einem der vorhergehenden Ansprüche, wobei die erste Verbindung über ein drahtloses lokales Netzwerk aufgebaut wird.

10. Verfahren nach einem der vorhergehenden Ansprüche, wobei die erste Verbindung und/oder die zweite Verbindung auf dem Internet Protokoll, IP, und dem Transmission Control Protocol, TCP, basiert.

11. Verfahren nach einem der vorhergehenden Ansprüche, wobei die Datenrate der zweiten Verbindung zwischen dem Netzwerkzugriffspunkt und dem Server höher ist als die der ersten Verbindung zwischen dem Netzwerkzugriffspunkt und der Applikation.

12. Verfahren nach einem der vorhergehenden Ansprüche, wobei die erste Teilmenge größer als die zweite Teilmenge ist.

13. Verfahren nach einem der vorhergehenden Ansprüche, wobei als Ursprungsnetzwerkadresse der zweiten Teilmenge des Datenstroms die Netzwerkadresse des Servers angegeben ist.

14. Fahrzeug (200) mit einem Netzwerkzugriffspunkt, um durch eine auf einem Benutzerendgerät ausgeführte Applikation einen Datenstrom von einem Server über den Netzwerkzugriffspunkt abzurufen, wobei der Netzwerkzugriffspunkt einen Pufferspeicher umfasst, und wobei der Netzwerkzugriffspunkt eingerichtet ist:
eine Anfrage der Applikation an den Server, eine Verbindung zwischen der Applikation und dem Server aufzubauen, zu empfangen, wobei die Anfrage der Applikation Information über den Datenstrom enthält;
eine erste Verbindung zwischen dem Netzwerkzugriffspunkt und der Applikation aufzubauen;
eine zweite Verbindung zwischen dem Netzwerkzugriffspunkt und dem Server aufzubauen;
eine erste Teilmenge des Datenstroms von dem Server über die zweite Verbindung anzufordern und zu empfangen;
die erste Teilmenge in dem Pufferspeicher zu speichern;
eine Aufforderung der Applikation an den Server, eine zweite Teilmenge des Datenstroms an die Applikation zu senden, zu empfangen, wobei die zweite Teilmenge von der ersten Teilmenge umfasst ist;
die zweite Teilmenge des Datenstroms von dem Pufferspeicher an die Applikation über die erste Verbindung zu senden; und
weitere Teilmengen des Datenstroms von dem Server mit einer höheren Frequenz anzufordern, als er weitere Aufforderungen der Applikation an den Server, eine Teilmenge des Datenstroms an die Applikation zu senden, empfängt.

## Claims

1. Method (100) for retrieving a data stream from a server by an application implemented on a user terminal, wherein the method comprises the following steps:
a network access point, which is arranged in a vehicle, receiving (102) a call from the application to the server to establish a connection between the application and the server, wherein the call from the application contains information about the data stream;
establishing (104) a first connection between the network access point and the application;
establishing (106) a second connection between the network access point and the server;
the network access point requesting and receiving (108) a first subset of the data stream from the server via the second connection;
storing (110) the first subset in a buffer memory of the network access point;
the network access point receiving (112) a request from the application to the server to send a second subset of the data stream to the application, wherein the second subset is comprised by the first subset; and
sending (114) the second subset of the data stream from the buffer memory to the application via the first connection,
wherein the network access point requests further subsets of the data stream from the server at a higher frequency than it receives further requests from the application to the server to send a subset of the data stream to the application.

2. Method according to Claim 1, further comprising:
removing the second subset of the data stream from the buffer memory; and
the network access point requesting and receiving a third subset of the data stream from the server via the second connection, wherein the third subset within the data stream follows logically after the first subset.

3. Method according to Claim 2, further comprising:
the network access point receiving a request from the application to the server to send a fourth subset of the data stream to the application, wherein the fourth subset within the data stream follows logically after the second subset, and wherein the fourth subset is comprised by the rest of the first subset still stored in the buffer memory, by the rest of the first subset and of the third subset still stored in the buffer memory, or by the third subset; and
sending the fourth subset of the data stream from the buffer memory to the application via the first connection.

4. Method according to any of the preceding claims, wherein the network access point requests further subsets of the data stream from the server until the buffer memory is full.

5. Method according to any of Claims 1 to 4, further comprising:
making the buffer memory available to the application by allocating memory space of a memory device of the network access point.

6. Method according to Claim 5, wherein the size of the buffer memory depends on an available memory space in the memory device.

7. Method according to Claim 5 or Claim 6, wherein the second connection is established via a cellular network, and wherein the size of the buffer memory depends on a status of the cellular network.

8. Method according to Claim 7, wherein the status of the cellular network is an instantaneous and/or a predicted, future status of the cellular network.

9. Method according to any of the preceding claims, wherein the first connection is established via a wireless local area network.

10. Method according to any of the preceding claims, wherein the first connection and/or the second connection is based on the Internet Protocol, IP, and the Transmission Control Protocol, TCP.

11. Method according to any of the preceding claims, wherein the data rate of the second connection between the network access point and the server is higher than the data rate of the first connection between the network access point and the application.

12. Method according to any of the preceding claims, wherein the first subset is larger than the second subset.

13. Method according to any of the preceding claims, wherein the network address of the server is specified as the source network address of the second subset of the data stream.

14. Vehicle (200) having a network access point in order for an application implemented on a user terminal to retrieve a data stream from a server via the network access point, wherein the network access point comprises a buffer memory, and wherein the network access point is configured:
to receive a call from the application to the server to establish a connection between the application and the server, wherein the call from the application contains information about the data stream;
to establish a first connection between the network access point and the application;
to establish a second connection between the network access point and the server;
to request and receive a first subset of the data stream from the server via the second connection;
to store the first subset in the buffer memory;
to receive a request from the application to the server to send a second subset of the data stream to the application, wherein the second subset is comprised by the first subset;
to send the second subset of the data stream from the buffer memory to the application via the first connection; and
to request further subsets of the data stream from the server at a higher frequency than it receives further requests from the application to the server to send a subset of the data stream to the application.

## Revendications

1. Procédé (100) de récupération d'un flux de données auprès d'un serveur par une application exécutée sur un terminal utilisateur, le procédé comprenant les étapes suivantes :
recevoir (102) au niveau du serveur une requête de l'application demandant d'établir une connexion entre l'application et le serveur, par le biais d'un point d'accès au réseau situé dans un véhicule,
la requête de l'application contenant des informations sur le flux de données ;
établir (104) une première connexion entre le point d'accès au réseau et l'application ;
établir (106) une deuxième connexion entre le point d'accès au réseau et le serveur ;
demander et recevoir (108) un premier sous-ensemble du flux de données par le biais du point d'accès au réseau depuis le serveur via la deuxième connexion ;
mémoriser (110) le premier sous-ensemble dans une mémoire tampon du point d'accès au réseau ;
recevoir (112) au niveau du serveur une requête de l'application demandant d'envoyer un deuxième sous-ensemble du flux de données à l'application, par le biais du point d'accès au réseau, le deuxième sous-ensemble étant englobé dans le premier sous-ensemble ; et
envoyer (114) le deuxième sous-ensemble du flux de données de la mémoire tampon à l'application par le biais de la première connexion,
le point d'accès réseau demandant au serveur des sous-ensembles supplémentaires du flux de données à une fréquence plus élevée que lors de la réception au niveau du serveur d'autres requêtes de l'application demandant d'envoyer un sous-ensemble du flux de données à l'application.

2. Procédé selon la revendication 1, comprenant en outre les étapes suivantes :
effacer le deuxième sous-ensemble du flux de données de la mémoire tampon ; et
demander et recevoir un troisième sous-ensemble du flux de données par le biais du point d'accès au réseau depuis le serveur via la deuxième connexion, le troisième sous-ensemble dans le flux de données suivant logiquement le premier sous-ensemble.

3. Procédé selon la revendication 2, comprenant en outre les étapes suivantes :
recevoir au niveau du serveur une de l'application demandant d'envoyer un quatrième sous-ensemble du flux de données à l'application, par le biais du point d'accès au réseau, le quatrième sous-ensemble du flux de données suivant logiquement le deuxième sous-ensemble et le quatrième sous-ensemble étant toujours englobé par le reste du premier sous-ensemble mémorisé dans la mémoire tampon, le reste du premier sous-ensemble ainsi que du troisième sous-ensemble mémorisé dans la mémoire tampon ou le troisième sous-ensemble ; et
envoyer le quatrième sous-ensemble du flux de données de la mémoire tampon à l'application via la première connexion.

4. Procédé selon l'une des revendications précédentes, le point d'accès au réseau demandant d'autres sous-ensembles du flux de données auprès du serveur jusqu'à ce que la mémoire tampon soit saturée.

5. Procédé selon l'une des revendications 1 à 4, comprenant en outre l'étape suivante :
fournir la mémoire tampon par allocation d'espace mémoire d'un dispositif de mémorisation du point d'accès au réseau pour l'application.

6. Procédé selon la revendication 5, la taille de la mémoire tampon dépendant d'un espace mémoire disponible dans le dispositif de mémorisation.

7. Procédé selon la revendication 5 ou la revendication 6, la deuxième connexion étant établie sur un réseau cellulaire, et la taille de la mémoire tampon dépendant d'un état du réseau cellulaire.

8. Procédé selon la revendication 7, l'état du réseau cellulaire étant un état futur instantané et/ou prédit du réseau cellulaire.

9. Procédé selon l'une des revendications précédentes, la première connexion étant établie sur un réseau local sans fil.

10. Procédé selon l'une des revendications précédentes, la première connexion et/ou la deuxième connexion étant basée sur le protocole Internet, IP, et le protocole de commande de transmission, TCP.

11. Procédé selon l'une des revendications précédentes, le débit de données de la deuxième connexion entre le point d'accès au réseau et le serveur étant supérieur à celui de la première connexion entre le point d'accès au réseau et l'application.

12. Procédé selon l'une quelconque des revendications précédentes, le premier sous-ensemble étant supérieur au deuxième sous-ensemble.

13. Procédé selon l'une quelconque des revendications précédentes, l'adresse réseau du serveur étant spécifiée comme adresse réseau source du deuxième sous-ensemble du flux de données.

14. Véhicule (200) comprenant un point d'accès au réseau pour récupérer, par le biais d'une application exécutée sur un terminal utilisateur, un flux de données auprès d'un serveur par le biais du point d'accès au réseau, le point d'accès au réseau comprenant une mémoire tampon et le point d'accès au réseau étant adapté pour :
recevoir au niveau du serveur une requête de l'application demandant d'établir une connexion entre l'application et le serveur, la requête de l'application contenant des informations sur le flux de données ;
établir une première connexion entre le point d'accès au réseau et l'application ;
établir une deuxième connexion entre le point d'accès au réseau et le serveur ;
demander et recevoir du serveur un premier sous-ensemble du flux de données via la deuxième connexion ;
mémoriser le premier sous-ensemble dans la mémoire tampon ;
recevoir au niveau du serveur une requête de l'application demandant d'envoyer un deuxième sous-ensemble du flux de données à l'application, le deuxième sous-ensemble étant englobé par le premier sous-ensemble ;
envoyer le deuxième sous-ensemble du flux de données de la mémoire tampon à l'application via la première connexion ; et
recevoir du serveur d'autres sous-ensembles du flux de données à une fréquence plus élevée que lors de la réception au niveau du serveur d'autres requêtes de l'application demandant d'envoyer un sous-ensemble du flux de données à l'application.
